# EUROPÄISCHE PATENTSCHRIFT

(11) **EP 3 771 952 B1**
(45) Veröffentlichungstag und Bekanntmachung des Hinweises auf die Patenterteilung: **15.11.2023**
(21) Anmeldenummer: 20180656.9
(22) Anmeldetag: 18.06.2020
(51) Int. Cl.: G05B 19/427

(54) **VERFAHREN ZUR AUTOMATISCHEN BEWEGUNG EINES ARBEITSGERÄTS SOWIE ARBEITSGERÄT**
WORKING IMPLEMENT AND METHOD FOR AUTOMATICALLY MOVING A WORKING IMPLEMENT
PROCÉDÉ DE DÉPLACEMENT AUTOMATIQUE D'UN APPAREIL DE TRAVAIL AINSI QU'APPAREIL DE TRAVAIL

(30) Priorität: 31.07.2019 DE 102019120633
(43) Veröffentlichungstag der Anmeldung: 03.02.2021
(73) Patentinhaber: Liebherr-Hydraulikbagger GmbH, 88457 Kirchdorf (DE)
(72) Erfinder: WIND, Hannes, 70563 Stuttgart (DE); SAWODNY, Prof. Dr. Oliver, 70563 Stuttgart (DE); RENNER, Anton, 70563 Stuttgart (DE); HOFMANN, Ferdinand, 88457 Kirchdorf/Iller (DE)
(74) Vertreter: Laufhütte, Dieter

(56) Entgegenhaltungen:
- EP-A1- 1 316 868
- DE-A1- 4 143 140
- DE-A1-102018 004 330
- DE-T2- 69 818 936
- US-A1- 2016 031 447

## Beschreibung

Die vorliegende Erfindung betrifft ein Verfahren zur automatischen Bewegung eines Arbeitsgeräts, insbesondere eines Materialumschlag- oder Erdbewegungsgeräts, nach dem Oberbegriff des Anspruchs 1 sowie ein Arbeitsgerät mit einer Steuerung zur Durchführung des erfindungsgemäßen Verfahrens.

Es kommt häufig vor, dass bei der Arbeit mit Arbeitsgeräten wie Materialumschlag- oder Erdbewegungsgeräten repetitive Arbeitsvorgänge durchgeführt werden, wie beispielsweise das Aufgreifen einer Ladung an einer ersten Position und das Abladen der aufgenommenen Ladung an einer zweiten Position.

Derartige sich wiederholende Arbeitsvorgänge können typischerweise grob in vier Unterschritte gegliedert werden. Zuerst wird Material bzw. eine Ladung durch das Arbeitsgerät an einer ersten Position aufgenommen. Anschließend wird das aufgenommene Material durch eine entsprechende Bewegung des Arbeitsgeräts an eine zweite Position verfahren. Im nächsten Schritt wird das Material an der zweiten Position abgeladen. Schließlich wird das Arbeitsgerät wieder zurück zur ersten Position verfahren, sodass es bereitsteht zur erneuten Aufnahme von Material.

Daraufhin kann diese Schrittabfolge wiederholt werden. Dabei kann die erste Position, an der das Material bzw. die Ladung aufgenommen wird, bei jedem Arbeitsschritt gleich bleiben, oder sie kann sich verändern - z.B. falls neues Material an einer anderen Stelle aufgenommen werden muss. Das gleiche gilt für die zweite Position, wenn sich die Stelle des Abladens von Arbeitsschritt zu Arbeitsschritt verändert. Während das Aufnehmen und das Abladen von Material von den vorherigen Aufnahme- und Abladepositionen abhängen können, ist die Bewegung des Arbeitsgeräts zwischen den Aufnahme- und Abladepositionen dagegen nur abhängig von den Start- und End-Positionen der aktuellen Bewegung.

Üblicherweise werden die oben dargestellten Arbeitsschritte manuell vom Bediener des Arbeitsgeräts durchgeführt. Aufgrund des repetitiven Charakters derartiger Arbeitsvorgänge wäre es aber wünschenswert, wenn diese zumindest teilweise automatisiert durchgeführt werden könnten. Darüber hinaus wäre es vorteilhaft, eine solche automatische Arbeitsbewegung an die gegenwärtigen Bedingungen oder Anforderungen anpassen zu können.

Ein Verfahren zur automatischen Bewegung eines Arbeitsgerätes nach dem Oberbegriff des Anspruchs 1 ist bereits aus der DE 4 143 140 A1 bekannt. Ähnliche Verfahren ergeben sich aus der DE 10 2018 004 330 A1, der EP 1 316 868 A1, der US2016/031447A1 und der DE 698 18 936 T2.

Der vorliegenden Erfindung liegt die Aufgabe zugrunde, ein Verfahren bereitzustellen, welches eine Automatisierung derartiger Arbeitsvorgänge eines Arbeitsgeräts ermöglicht und dem Bediener gleichzeitig erlaubt, Einfluss auf den automatisch ausgeführten Bewegungsablauf zu nehmen.

Erfindungsgemäß wird diese Aufgabe durch ein Verfahren mit den Merkmalen des Anspruchs 1 gelöst. Demnach handelt es sich bei dem erfindungsgemäßen Verfahren um ein Verfahren zur automatischen Bewegung eines Arbeitsgeräts, insbesondere eines Materialumschlag- oder Erdbewegungsgeräts, wobei das Arbeitsgerät eine Steuerung und mindestens zwei Komponenten umfasst. Die Komponenten können jeweils mittels eines von der Steuerung steuerbaren bzw. betätigbaren Aktuators unabhängig voneinander bewegt werden. Die Steuerung weist einen Lernmodus und einen Abfahrmodus auf, wobei im Abfahrmodus das Arbeitsgerät durch eine entsprechende Steuerung der Aktuatoren automatisch von einer ersten Position in eine zweite Position verfahren wird. Der Bediener des Arbeitsgeräts kann dabei insbesondere zwischen dem Lernmodus und dem Abfahrmodus umschalten.

Die Steuerung erfasst im Lernmodus während der Ausführung einer Bewegung des Arbeitsgeräts Daten betreffend die Einzelbewegungen der Komponenten und speichert diese unter gewissen Kriterien ab. Die Steuerung der Aktuatoren bei der automatischen Bewegung des Arbeitsgeräts im Abfahrmodus erfolgt dann auf Grundlage dieser Daten, wobei mindestens ein Parameter der automatischen Bewegung des Arbeitsgeräts durch den Bediener des Arbeitsgeräts verändert bzw. eingestellt werden kann, um diese zu beeinflussen.

Zum Einprogrammieren bzw. Einlernen einer später automatisch auszuführenden Bewegung des Arbeitsgeräts schaltet der Bediener in den Lernmodus. Eine daraufhin durchgeführte Bewegung wird von der Steuerung erfasst und entsprechende diese Bewegung charakterisierende Informationen, insbesondere Bewegungsbahnen der verschiedenen Aktuatoren, abgespeichert. Diese Daten stehen für spätere automatische Arbeitsvorgänge zur Verfügung.

Die Erfassung der zu "erlernenden" Bewegung im Lernmodus kann während einer manuell vom Bediener ausgeführten Bewegung des Arbeitsgeräts erfolgen. Ebenfalls kann vorgesehen sein, dass während der Ausführung von Arbeiten mit dem Arbeitsgerät gewisse Bedienmuster des Bedieners detektiert und aufgezeichnet und durch die Steuerung ausgewertet werden, wobei sich wiederholende Arbeitszyklen erkannt und entsprechende Bewegungsbahnen der die Komponenten bewegenden Aktuatoren generiert werden, welche dann im Abfahrmodus automatisch abgefahren werden.

Zur automatischen Durchführung der im Lernmodus erfassten Bewegung schaltet der Bediener in den Abfahrmodus. Die Ansteuerung der Aktuatoren erfolgt daraufhin auf Grundlage der durch die Steuerung abgespeicherten Daten, insbesondere auf Grundlage von im Lernmodus aufgenommenen Bewegungsbahnen der Aktuatoren. Hierbei ist es möglich, dass die automatisch durchgeführte Bewegung eine Bewegung von einer Start- in eine Endposition betrifft, oder dass das Arbeitsgerät zwischen einer Start- und Endposition hin und her bewegt wird. Ferner kann vorgesehen sein, dass der Bediener während des automatischen Bewegungsvorgangs jederzeit manuell eingreifen und die automatische Bewegung stoppen oder übersteuern kann.

Darüber hinaus kann der Bediener erfindungsgemäß mindestens einen Parameter der automatischen Bewegung des Arbeitsgeräts wie z.B. die Geschwindigkeit der Aktuatoren verändern bzw. einstellen, vorzugsweise mittels eines mit der Steuerung verbundenen Eingabemittels. Dadurch kann die im Abfahrmodus automatisch ausgeführte Bewegung an verschiedene Arbeits- und/oder Umgebungsbedingungen, an das aufzunehmende Material oder andere Faktoren angepasst werden. Ferner ist es vorstellbar, dass der Bediener im Abfahrmodus manuell Korrekturen der automatisch ausgeführten Bewegung durchführen kann, sodass er beispielsweise die Start- und/oder Endposition beeinflussen bzw. verändern kann, während die Bewegung zwischen diesen Positionen weiterhin automatisch ausgeführt wird.

Bei dem Eingabemittel kann es sich um eine eigenständige Vorrichtung oder aber um ein bereits vorhandenes zur manuellen Bedienung des Arbeitsgeräts vorgesehenes Eingabemittel (z.B. ein oder mehrere Meisterschalter) handeln.

Vorliegend wird mit dem Begriff Aktuator jede Form von antriebstechnischer Baueinheit bezeichnet, welche bei dem Arbeitsgerät zur Bewegung einer Komponente eingesetzt wird. Dabei kann es sich um einen hydraulisch, pneumatisch, elektrisch oder anderweitig arbeitenden Aktuator handeln. Bei den bewegten Bauteilen kann es sich z.B. um einen drehbar gelagerten Oberwagen, einen Ausleger, einen Stiel, ein Werkzeug oder ein beliebiges anderes bewegbares Bauteil handeln.

Erfindungsgemäß ist vorgesehen, dass die Steuerung im Lernmodus die Bewegungsbahnen der Aktuatoren in diskreten Zeitabständen erfasst, wobei die erfassten Daten die momentanen Positionen und vorzugsweise die momentanen Geschwindigkeiten der Aktuatoren umfassen. Die Schrittweite der zeitlichen Diskretisierung bestimmt dabei die Genauigkeit der Erfassung der Bewegungsbahnen sowie die dabei anfallende Datenmenge. Bei jedem diskreten Zeitschritt werden die Bewegungsbahnen ausgewertet und die momentane Position sowie die momentane Geschwindigkeit der Aktuatoren erfasst. Für jeden zur aufgezeichneten Bewegung des Arbeitsgeräts beitragenden Aktuator ergibt sich so eine Bewegungsbahn, welche den Verlauf der Aktuatorposition bzw. -stellung in Abhängigkeit der Zeit darstellt. Hierfür ist vorzugsweise eine entsprechende Sensorik vorgesehen, um diese Daten zu messen und der Steuerung zur Verfügung zu stellen.

Entsprechend der Erfindung ist es auchvorgesehen, dass die Steuerung für jede im Lernmodus erfasste Bewegungsbahn momentane Aktuatorpositionen als charakteristische Punkte speichert, wobei die Steuerung vorzugsweise eine momentane Aktuatorposition zu einem bestimmten Zeitpunkt als charakteristischen Punkt klassifiziert, falls mindestens eine Bedingung hinsichtlich der momentanen Aktuatorgeschwindigkeit erfüllt ist. Charakteristische Punkte sind gegenüber anderen Aktuatorpositionen ("Punkten") ausgezeichnete Aktuatorpositionen. Zu den charakteristischen Punkten gehören die Aktuatorpositionen zu Beginn und/oder am Ende einer Aktuatorbewegung, also diejenigen Aktuatorpositionen einer Bewegungsbahn, die die Bewegungsabläufe des zugehörigen Aktuators charakterisieren.

Ein Abfahren der im Lernmodus aufgenommenen Bewegungen der Aktuatoren kann im Abfahrmodus auf Grundlage der gespeicherten charakteristischen Punkte erfolgen. Dadurch wird die zu speichernde Datenmenge reduziert, da beispielsweise Punkte einer Bewegungsbahn während einer konstanten Bewegung oder während eines Stillstands des Aktuators nicht gespeichert zu werden brauchen.

Abhängig von den zur Klassifizierung von charakteristischen Punkten verwendeten Bedingungen hinsichtlich der momentanen Aktuatorgeschwindigkeit können weitere Folgeschritte vorteilhaft oder notwendig sein, um eine weitere Selektion der im ersten Schritt gefundenen charakteristischen Punkte vorzunehmen. In diesem Fall werden nur die nach einer entsprechenden Analyse bzw. Aussortierung verbleibende charakteristische Punkte von der Steuerung gespeichert.

Weiter erfindungsgemäß ist vorgesehen, dass die Bedingung erfüllt ist, wenn die momentane Geschwindigkeit des Aktuators einen ersten Schwellenwert zu Beginn einer Aktuatorbewegung übersteigt oder am Ende einer Aktuatorbewegung unterschreitet und/oder wenn sich das Vorzeichen der momentanen Geschwindigkeit des Aktuators ändert. Der erste Schwellenwert kann sich aus mehreren Parametern zusammensetzen, welche verschiedene Aspekte wie beispielsweise einen Hysteresewert berücksichtigen. Der Schwellenwert bzw. ein oder mehrere der in den Schwellenwert eingehenden Parameter kann durch den Bediener einstellbar sein. Dadurch kann die Erfassung der Bewegungsbahnen an die aktuellen Bedingungen bzw. Anforderungen angepasst werden.

Vorteilhafte Ausführungsformen der Erfindung ergeben sich aus den Unteransprüchen und der nachfolgenden Beschreibung.

In einer Ausführungsform ist vorgesehen, dass der einstellbare Parameter eine Maximal- oder Minimalgeschwindigkeit eines oder mehrerer Aktuatoren, einen minimalen Energieeintrag, eine kürzeste, schnellste oder anhand anderer Kriterien optimierte Strecke oder eine Position, insbesondere Anfangs- oder Endposition, des Arbeitsgeräts ist.

In einer weiteren Ausführungsform ist vorgesehen, dass die Steuerung nur solche charakteristischen Punkte speichert, deren Abstand zu einem direkt vorangegangenen und/oder darauffolgenden charakteristischen Punkt einen zweiten Schwellenwert überschreitet. Bei dem betrachteten Abstand handelt es sich insbesondere um einen Positionsabstand. Wie zuvor angesprochen kann es vorkommen, dass im ersten Schritt der Bestimmung von charakteristischen Punkten der Bewegungsbahnen zu viele bzw. unnötige Punkte erkannt werden. Durch das Aussortieren von charakteristischen Punkten, welche einen geringen Abstand zu einem (in Zeitrichtung der aufgenommenen Bewegungsbahnen gesehen) vorherigen oder darauffolgenden charakteristischen Punkt aufweisen, werden charakteristische Punkte aussortiert, die beispielsweise aufgrund eines Überschwingens der durch einen Aktuator bewegten Komponente resultieren und nahe beieinander liegen. Dies kann ein Resultat der Bedingung sein, dass ein charakteristischer Punkt bei einem Vorzeichenwechsel der momentanen Aktuatorgeschwindigkeit erkannt wird. Nach dem Aussortieren verbleiben die Start- und End-Punkte der Aktuatorbewegungen, welche ausreichen, um im Abfahrmodus die erfassten Bewegungen abzufahren. Die Berechnung der Bewegungsbahnen zwischen den gespeicherten charakteristischen Punkten kann mittels eines speziellen Berechnungsverfahrens, z.B. einer Trajektorienplanung, erfolgen. Hierzu kann ein Planungsmittel vorgesehen sein.

In einer weiteren Ausführungsform ist vorgesehen, dass die Steuerung im Lernmodus für jede Bewegungsbahn zusätzlich die nicht als charakteristischer Punkt klassifizierten Aktuatorpositionen zu den Zeitpunkten speichert, die den Zeitpunkten der erfassten charakteristischen Punkte der anderen Bewegungsbahnen entsprechen. Neben den für eine Bewegungsbahn erkannten charakteristischen Punkten werden also zusätzlich für jeden Zeitpunkt, an dem für eine der anderen Bewegungsbahnen ein charakteristischer Punkt erkannt wurde, diese Aktuatorposition gespeichert, obwohl es sich für die betrachtete Bewegungsbahn dabei nicht um einen charakteristischen Punkt handelt. Dadurch wird erreicht, dass die Zeitpunkte der insgesamt gespeicherten Aktuatorpositionen einer Bewegungsbahn den Zeitpunkten der insgesamt gespeicherten charakteristischen Aktuatorpositionen der übrigen Bewegungsbahnen entsprechen. Die zusätzlich gespeicherten Punkte können auch als Synchronisierungspunkte bezeichnet werden.

Im Abfahrmodus werden also für jede Bewegungsbahn die charakteristischen Punkte und Synchronisierungspunkte nacheinander angefahren. Durch das Speichern der Synchronisierungspunkte wird ein insgesamt synchronisierter Bewegungsablauf sichergestellt.

In einer weiteren Ausführungsform ist vorgesehen, dass die Steuerung die Aktuatoren derart ansteuert, dass alle Aktuatoren die einander zeitlich entsprechenden Aktuatorpositionen innerhalb eines vorzugsweise einstellbaren Zeitfensters zeitgleich erreichen, wobei die Geschwindigkeiten aller Aktuatoren an den langsamsten Aktuator angepasst werden, wobei die Anpassung insbesondere mittels eines Iterativen Verfahrens erfolgt. Alternativ kann jedoch auch ein beliebiges anderes Verfahren, beispielsweise ein Optimierungsverfahren, zum Einsatz kommen. Dadurch wird eine flüssige Gesamtbewegung des Arbeitsgeräts erreicht.

In einer weiteren Ausführungsform ist vorgesehen, dass die Steuerung im Abfahrmodus die verschiedenen Aktuatoren auf Grundlage der für jede Bewegungsbahn gespeicherten Aktuatorpositionen (dabei kann es sich um die charakteristischen Punkte alleine oder zusammen mit den Synchronisationspunkten handeln) ansteuert, wobei die Steuerung ein Planungsmittel umfasst, welches die automatisch abzufahrenden Bewegungsbahnen auf Grundlage der gespeicherten Aktuatorpositionen berechnet, wobei die Aktuatoren so angesteuert werden, dass sie den berechneten Bewegungsbahnen folgen. Bei dem Planungsmittel kann es sich um einen Trajektorienplaner handeln, welcher die Bewegungsbahnabschnitte zwischen den im Lernmodus erfassten und gespeicherten Aktuatorpositionen plant bzw. berechnet. Hier kann jeder beliebige Trajektorienplaner zum Einsatz kommen. Im Abfahrmodus werden dann die durch das Planungsmittel auf Grundlage der von der Steuerung gespeicherten Punkte neu berechneten Bewegungsbahnen der Aktuatoren abgefahren.

In einer weiteren Ausführungsform ist vorgesehen, dass das Planungsmittel die abzufahrenden Bewegungsbahnen der Aktuatoren jeweils abschnittsweise zwischen je zwei benachbarten gespeicherten Aktuatorpositionen neu berechnet, wobei das Planungsmittel, sobald die momentane Position eines Aktuators einen Abstandschwellenwert zu der aktuell angefahrenen gespeicherten Aktuatorposition unterschreitet, den nächsten Bewegungsbahnabschnitt bis zur darauffolgenden gespeicherten Aktuatorpositionen berechnet. Der Abstandsschwellenwert ist vorzugsweise festlegbar bzw. einstellbar.

Befinden sich alle Bewegungsbahnen innerhalb des Abstandschwellenwerts um die anzufahrenden gespeicherten Aktuatorpositionen, so erfolgt die Planung bzw. Neuberechnung der nächsten Bewegungsbahnabschnitte zu den nächsten anzufahrenden gespeicherten Aktuatorpositionen. Als Startwerte für die Bewegungsbahnen werden insbesondere die aktuellen Referenzwerte jeder Bewegungsbahn verwendet, damit ein möglichst flüssiges Verfahren resultiert. Die Abstandschwellenwerte können dabei vorzugsweise für jeden Punkt und für jeden Aktuator separat festgelegt werden.

In einer weiteren Ausführungsform ist vorgesehen, dass die Berechnung der Gesamtbewegung der Arbeitsmaschine und/oder der Einzelbewegungen der Aktuatoren durch das Planungsmittel unter definierten Randbedingungen erfolgt, wobei mindestens eine Randbedingung durch den Bediener, insbesondere über eine mit der Steuerung verbundene Eingabeeinheit, eingestellt werden kann. Die Neuplanung der Bewegungsbahnen mittels des Planungsmittels kann also unter verschiedenen Kriterien angepasst werden. Dabei können Beschränkungen, die sich durch die Umgebung und/oder die Charakteristik des Arbeitsgeräts ergeben, berücksichtigt werden. Auch Beschränkungen, die sich aus der vorhandenen Infrastruktur ergeben, können idealerweise berücksichtigt werden.

In einer weiteren Ausführungsform ist vorgesehen, dass es sich bei der einstellbaren Randbedingung um eine Maximal- oder Minimalgeschwindigkeit eines oder mehrerer Aktuatoren, einen minimalen Energieeintrag, eine kürzeste, schnellste oder anhand anderer Kriterien optimierte Strecke oder eine Position, insbesondere Anfangs- oder Endposition, bzw. ein Offset-Wert der Start- oder Endposition, des Arbeitsgeräts handelt.

Gemäß einer alternativen Ausführungsform werden keine charakteristischen und synchronisierten Punkte bestimmt, sondern es werden im Lernmodus bei jedem Zeit- bzw. Abtastschritt die momentanen Aktuatorpositionen und -geschwindigkeiten erfasst und gespeichert und auf Grundlage dieser Daten eine zeitoptimale Trajektorie generiert, welche im Abfahrmodus automatisch abgefahren wird. Dabei werden die im Lernmodus für jeden Aktuator erfassten Positionspfade beibehalten, d.h. nicht angepasst oder verändert, sondern die Geschwindigkeitsverläufe optimiert. Um die zeitoptimale Trajektorie zu erhalten, wird die Geschwindigkeit jedes Aktuators an jedem Abtastschritt skaliert. Um den Positionsverlauf jedes Aktuators beizubehalten, wird für jeden Abtastschritt nur ein einziger Skalierungsfaktor verwendet. Die zeitoptimale Trajektorie kann von einem Planungsmittel berechnet werden.

Das allgemeine Optimierungsproblem zum Bestimmen der zeitoptimalen Trajektorie besteht nun darin, die Endzeit der Trajektorie zu minimieren. Darüber hinaus werden vorzugsweise physikalische Beschränkungen wie die maximale Geschwindigkeit der Aktuatoren, die maximale Beschleunigung der Aktuatoren und/oder die maximale Fördermenge einer Pumpe berücksichtigt. Da die Vorsteuerung des Geschwindigkeitsreglers eine Beschleunigung benötigt, wird vorteilhafterweise zudem der Ruck begrenzt. Die Beschränkungen können als lineare und nichtlineare Ungleichungsbeschränkungen formuliert werden und können ferner durch den Bediener einstellbar sein. Die Optimierungsvariablen sind die zuvor erwähnten Skalierungsfaktoren.

In einer weiteren Ausführungsform ist vorgesehen, dass die Bewegung des Arbeitsgeräts im Lernmodus aufgrund einer manuellen Bedienung, beispielsweise über die Meisterschalter des Arbeitsgeräts, erfolgt. Das Einlernen der Bewegungsbahnen kann alternativ oder zusätzlich zur manuellen Bedienung durch einen Algorithmus geschehen, der die Bedienmuster sich wiederholender Arbeitszyklen des Bedieners detektiert. Darüber hinaus können die Bewegungsabläufe auch durch externe Systeme wie Planungstools, Prozessleitsysteme, eine Baustellenverwaltung, etc. vorgegeben werden.

In einer weiteren Ausführungsform ist vorgesehen, dass eine erste Komponente ein drehbar auf einem Unterwagen des Arbeitsgeräts gelagerter Oberwagen und eine zweite Komponente ein an dem Oberwagen um eine horizontale Achse schwenkbar gelagertes erstes Auslegerelement ist, wobei vorzugsweise eine dritte Komponente ein an dem Ausleger schwenkbar gelagertes zweites Auslegerelement, beispielsweise ein Stiel, ist.

Die vorliegende Erfindung betrifft weiterhin ein Arbeitsgerät, insbesondere Materialumschlag- oder Erdbewegungsgerät, mit einer Steuerung zur Ausführung des erfindungsgemäßen Verfahrens. Dabei ergeben sich offensichtlich dieselben Vorteile und Eigenschaften wie für das erfindungsgemäße Verfahren, weshalb an dieser Stelle auf eine wiederholende Beschreibung verzichtet wird.

Vorliegend wird von einer Erfassung und Darstellung der Bewegungsbahnen in Aktuatorkoordinaten ausgegangen. Dies ist allerdings lediglich eine von mehreren möglichen Konventionen. Alternativ ist ebenfalls ein Erfassen und Abfahren in einem anderen Koordinatensystem, beispielsweise in Bezug auf einen Tool-Center-Point (TCP), möglich, ohne dass dies einen Einfluss auf den erfindungsgemäßen Gegenstand hat. Die verschiedenen Koordinatensysteme lassen sich gegebenenfalls durch entsprechende Transformationen ineinander umrechnen.

Weitere Merkmale, Einzelheiten und Vorteile der Erfindung ergeben sich aus den nachfolgend anhand der Figuren erläuterten Ausführungsbeispielen. Es zeigen:
- Figur 1:: ein Ausführungsbeispiel eines Arbeitsgeräts mit mehreren bewegbaren Komponenten in einer schematischen Seitenansicht;
- Figur 2a-c:: im Lernmodus erfasste Bewegungsbahnen von drei Aktuatoren mit durch das erfindungsgemäße Verfahren aufgefundenen charakteristischen Punkten;
- Figur 3:: einen vergrößerten Ausschnitt der in Figur 2c gezeigten Bewegungsbahn;
- Figur 4a-c:: die in den Figuren 2a-c gezeigten Bewegungsbahnen, wobei die durch das erfindungsgemäße Verfahren als Start- und Endpunkte klassifizierten charakteristischen Punkte hervorgehoben sind;
- Figur 5:: einen vergrößerten Ausschnitt der in Figur 4c gezeigten Bewegungsbahn; und
- Figur 6a-c:: die in den Figuren 2a-c gezeigten Bewegungsbahnen mit durch das erfindungsgemäße Verfahren zeitlich synchronisierten Punkten;

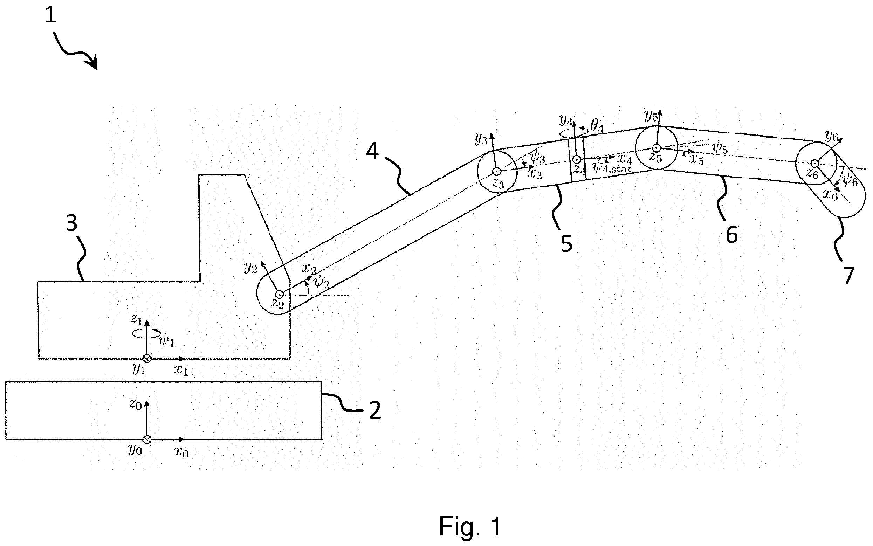

In der Figur 1 ist zur Illustration der dem erfindungsgemäßen Verfahren zugrundeliegenden Kinematik ein Ausführungsbeispiel eines Arbeitsgeräts 1 in einer schematischen Seitenansicht dargestellt. Das Arbeitsgerät 1 umfasst einen drehbar auf einem Unterwagen 2 gelagerten und mittels eines Drehwerks (nicht dargestellt) rotatorisch antreibbaren Oberwagen 3. An den Oberwagen 3 ist ein mehrere bewegliche Komponenten 4-7 umfassender Ausleger angelenkt, an dessen vom Oberwagen 3 beabstandeten Ende ein Werkzeug (nicht gezeigt) wie beispielsweise ein Baggerlöffel oder Greifer befestigt sein kann.

Die verschiedenen Komponenten (zu denen nachfolgend auch der drehbare Oberwagen 3 gezählt wird) lassen sich unabhängig voneinander mittels unterschiedlicher Aktuatoren (nicht gezeigt) bewegen. Im Falle des Oberwagens 3 handelt es sich dabei beispielsweise um das Drehwerk, im Falle der Auslegerkomponenten 4-7 um Hydraulikzylinder. So bewirkt beispielsweise ein Ausfahren eines zwischen Oberwagen 3 und Auslegerkomponente 4 angeordneten Hydraulikzylinders ein Verschwenken dieser Auslegerkomponente 4, sodass sich dessen vom Oberwagen 3 beabstandetes Ende nach oben bewegt.

Das Arbeitsgerät 1 umfasst eine Steuerung, welche die einzelnen Aktuatoren ansteuert und somit die Bewegung des Arbeitsgeräts 1 steuert. Die Gesamtbewegung des Arbeitsgeräts 1 setzt sich dabei zusammen aus den Einzelbewegungen der durch die verschiedenen Aktuatoren bewegten Komponenten 2-7.

In der Figur 1 ist zur Veranschaulichung der Kinematik für jede Komponente 2-7 ein eigenes Koordinatensystem mit den die jeweilige Komponente charakterisierenden x-, y- und z-Achsen sowie - entsprechend den zur Verfügung stehenden Rotationsfreiheitsgraden - den Winkeln *ψ*, *θ* in Bezug auf die jeweils vorgelagerte Komponente eingezeichnet.

Selbstverständlich sind die Anzahl der beweglichen Komponenten, deren exakte Ausgestaltung sowie die Art und Anzahl der zugeordneten Aktuatoren hier lediglich exemplarisch aufgezeigt. Das erfindungsgemäße Verfahren funktioniert jedoch unabhängig von der genauen Anzahl und Ausgestaltung der Komponenten und Aktuatoren, insbesondere auch bei einer größeren Zahl von Komponenten bzw. Bewegungsfreiheitsgraden.

Im Folgenden wird zur Veranschaulichung des erfindungsgemäßen Verfahrens von einem Arbeitsgerät 1 mit einem mittels eines Drehwerks drehbaren Oberwagen, einem daran angelenkten und mittels eines Hydraulikzylinders bewegbaren Ausleger sowie einem an den Ausleger angelenkten und ebenfalls mittels eines Hydraulikzylinders bewegbaren Stiel ausgegangen. Jeder der drei beweglichen Komponenten (Oberwagen, Ausleger, Stiel) ist also ein Aktuator (Drehwerk, Hydraulikzylinder) zugeordnet.

Die Positionen der Aktuatoren bestimmen dabei die Positionen bzw. Stellungen der jeweiligen Komponenten. Dabei ist es für das erfindungsgemäße Verfahren vollkommen unerheblich, in welchem Koordinatensystem die Bewegungen betrachtet werden. Vorliegend wird der Einfachheit halber von Aktuatorkoordinaten ausgegangen, sodass beispielsweise die Position des Oberwagens durch den Winkel des Drehwerks und die Positionen des Auslegers und des Stiels durch die Ausfahrpositionen bzw. Stellungen der Hydraulikzylinder bestimmt sind. Grundsätzlich ist es aber genauso möglich, Bewegungsbahnen des Tool-Center-Points (TCP) aufzunehmen und abzufahren.

Die Steuerung des Arbeitsgeräts 1 weist zwei Modi auf, einen Lernmodus und einen Abfahrmodus. Im Lernmodus bewegt der Bediener das Arbeitsgerät 1 von einem Startpunkt zu einem Zielpunkt in einer entsprechenden Bahn, wobei er das an die Steuerung meldet. Dabei werden für jeden Aktuator sogenannte charakteristische Punkte 20 gespeichert. Unter Punkten werden im Folgenden generell Positionen der Aktuatoren verstanden. Was einen charakteristischen Punkt 20 auszeichnet wird nachfolgend näher spezifiziert.

Um die Konsistenz der Bewegung zu wahren, werden zu einem charakteristischen Punkt 20 eines Aktuators ebenfalls Synchronisierungspunkte 40 für die restlichen Aktuatoren gespeichert. Ist der Lernmodus beendet, signalisiert das der Bediener durch eine entsprechende Eingabe. Die aufgenommenen charakteristischen Punkte 20 werden anschließend nochmals inspiziert und von der Steuerung durch einen entsprechenden Algorithmus gegebenenfalls aussortiert. Die genaue Funktionsweise wird ebenfalls weiter unten erläutert.

Im Abfahrmodus werden die gespeicherten Punkte 30, 40 durch eine entsprechende Ansteuerung der Aktuatoren durch die Steuerung nacheinander automatisch angefahren. Dabei werden die Aktuatoren, welche schneller am nächsten anzufahrenden Punkt 30, 40 sind, durch die Steuerung auf den langsamsten Aktuator synchronisiert. Dies erfolgt mittels eines iterativen Verfahrens. Damit das Arbeitsgerät 1 nicht an jedem anzufahrenden Punkt 30, 40 zum Stillstand kommt, wird ein Radius bzw. Abstandsschwellenwert um jeden gespeicherten Punkt 30, 40 definiert. Ist jeder der an der Bewegung des Arbeitsgeräts 1 teilnehmenden Aktuatoren innerhalb dieses Radius bzw. Abstandsschwellenwerts, so wird direkt zum nächsten gespeicherten Punkt 30, 40 weitergeplant. Die Planung bzw. Neuberechnung der Bewegungsbahnabschnitte erfolgt mit Hilfe eines Planungsmittels.

Im Lernmodus werden die erfassten charakteristischen Punkte 20, 30 der Aktuatoren auf der Grundlage zweier Algorithmen gespeichert. Der Algorithmus 1 speichert charakteristische Punkte 20 und entsprechende Synchronisierungspunkte 40 abhängig von der aktuellen Geschwindigkeit der Aktuatoren während der Bediener die Ausrüstung manuell bewegt. Der Algorithmus 2 wird nach dem Vorfahren ausgeführt und sortiert charakteristische Punkte 20 aus, welche sehr nahe beieinander liegen. Diese Punkte 20 wurden beispielsweise durch Schwingungen beim Abbremsen gespeichert. Es sei an dieser Stelle nochmals darauf hingewiesen, dass die Algorithmen für beliebig viele Aktuatoren funktionieren.

Der Algorithmus 1 extrahiert charakteristische Punkte 20 für alle Aktuatoren. Ein charakteristischer Punkt 20 ist ein Punkt, an welchem die Geschwindigkeit des Aktuators vₖ sich von der Null-Geschwindigkeit um einen ersten Schwellenwert (vorliegend die Summe oder Differenz aus einem Schwellenwert v_{TH} und einer Hysterese v_{Hy}) unterscheidet. Zudem wird ein Punkt als charakteristischer Punkt 20 klassifiziert, wenn sich das Vorzeichen der Geschwindigkeit vₖ ändert (d.h. bei einer Richtungsumkehr) und die obige Bedingung nicht erfüllt ist. Der Algorithmus 1 ist nachfolgend anhand eines Pseudocode-Beispiels aufgezeigt.

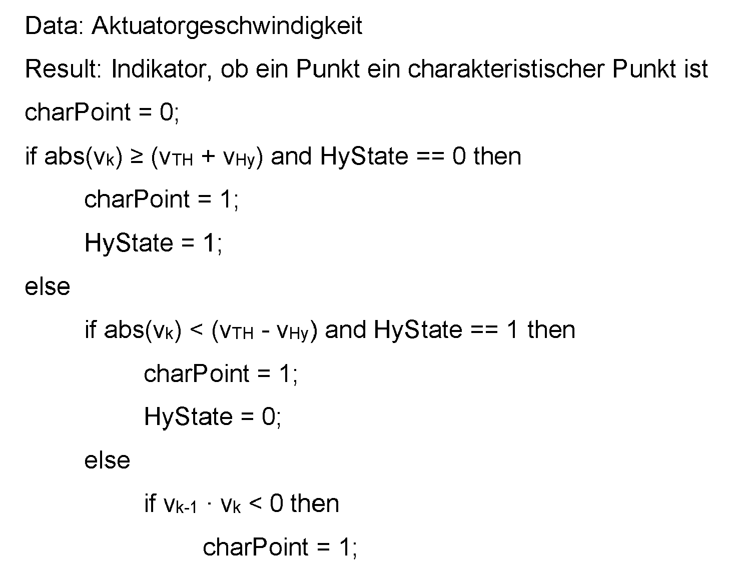

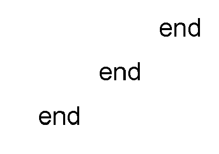

Die Bedingung vₖ₋₁ · vₖ < 0 ist bei einem Vorzeichenwechsel erfüllt, vₖ₋₁ steht dabei für die zuvor (d.h. beim vorherigen Diskretisierungsschritt bzw. Sampling-Punkt) aufgenommene Aktuatorgeschwindigkeit, während vₖ für die aktuelle Aktuatorgeschwindigkeit steht. Das Setzen des Parameters charPoint = 1 bedeutet, dass der entsprechende Punkt als charakteristischer Punkt 20 klassifiziert wurde.

Die Verwendung des Parameters HyState sorgt dafür, dass nicht jeder Punkt, welcher die Bedingung abs(vₖ) ≥ (v_{TH} + v_{Hy}) erfüllt, als charakteristischer Punkt 20 klassifiziert wird, sondern erst derjenige Punkt wieder als charakteristischer Punkt 20 gilt, bei dem die momentane Geschwindigkeit unter den Wert (v_{TH} - v_{Hy}) fällt. Durch den Algorithmus 1 werden daher unter anderem die Start- und Endpunkte einer Aktuatorbewegung als charakteristische Punkte 20 klassifiziert.

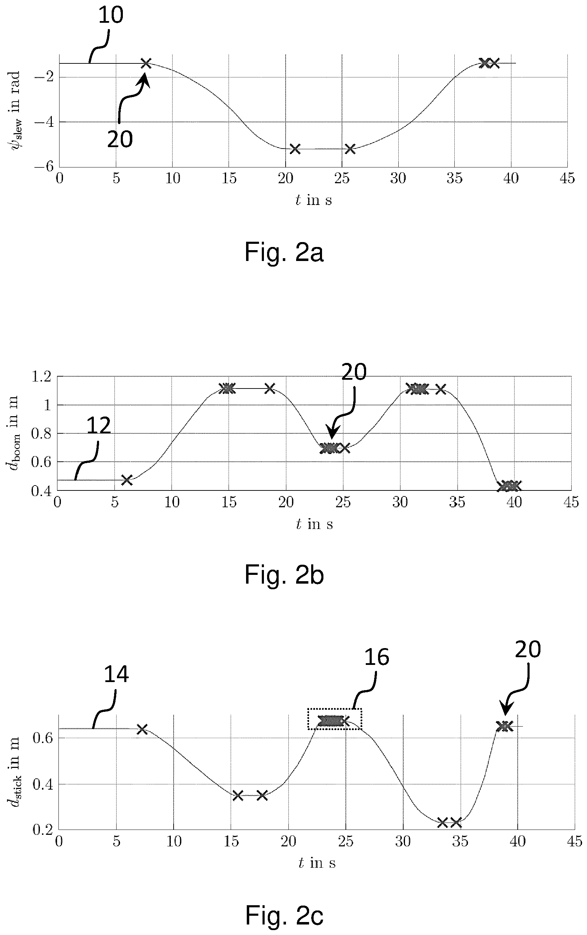

Das Resultat des Algorithmus 1 ist in den Figuren 2a-c für das Drehwerk (Figur 2a), den Ausleger (Figur 2b) und den Stiel (Figur 2c) gezeigt. Dabei sind die aufgefundenen charakteristischen Punkte 20 entlang der Bewegungsbahnen 10, 12, 14 der drei Aktuatoren als "x" gekennzeichnet. Es ist zu erkennen, dass für das Drehwerk zu Beginn der Bewegung bei t = 7.5 s der Algorithmus 1 einen charakteristischen Punkt 20 detektiert hat. Des Weiteren wurden beim Stopp (t = 21 s) und dem erneuten Start (t = 26 s) der Drehbewegung jeweils charakteristische Punkte 20 detektiert. Beim Stoppen der Bewegung bei t = 35 s wurden darauffolgend mehrere in kurzer Zeit aufeinanderfolgende charakteristische Punkte 20 erkannt. Der Grund dafür ist ein geringer Geschwindigkeitsschwellenwert, eine geringe Hysterese und das Überschwingen des Drehwerks (d.h. mehrere aufeinanderfolgende Vorzeichenwechsel der Aktuatorgeschwindigkeit). Dadurch werden mehrere Punkte 20 als charakteristisch kategorisiert.

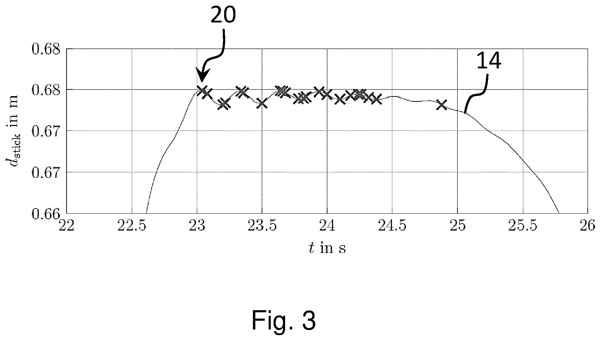

Ähnlich zeigen sich die gefundenen charakteristischen Punkte 20 für den Ausleger (Figur 2b) und den Stiel (Figur 2c), wobei dort aufgrund eines stärker ausgeprägten Überschwingens eine größere Anzahl charakteristischer Punkte 20 beim Anhalten gefunden werden. Verdeutlicht wird das beim Stiel in der Figur 2c. In der Figur 3 ist der durch den gepunkteten Kasten 16 markierte Bereich aus Figur 2c vergrößert dargestellt. Hier ist das Überschwingverhalten, aus dem sich das Auffinden mehrerer aufeinanderfolgender charakteristischer Punkte 20 ergibt, deutlich erkennbar.

Generell ist festzustellen, dass alle wesentlichen Start- und Stopp-Punkte der Bewegungskurven 10, 12, 14 durch den Algorithmus 1 zuverlässig detektiert werden.

Der Algorithmus 2, welcher dem Algorithmus 1 nachgeschaltet ist, soll charakteristische Punkte 20, welche einen geringen örtlichen Abstand zueinander aufweisen, aussortieren. Dabei ist es wichtig, dass jeweils der erste und letzte charakteristische Punkt 20 einer Stopp-Start-Bewegung behalten wird. Beim Algorithmus 2 wird für jeden charakteristischen Punkt 20 jeweils der Ortsabstand zum vorherigen ("pₖ₋₁") und zum darauffolgenden ("pₖ₊₁") charakteristischen Punkt 20 betrachtet. Sind beide Abstände kleiner als ein zweiter Schwellenwert p_{TH}, so wird dieser betrachtete charakteristische Punkt pₖ aussortiert. Der Algorithmus 2 ist anhand des folgenden Pseudocode-Beispiels aufgezeigt.

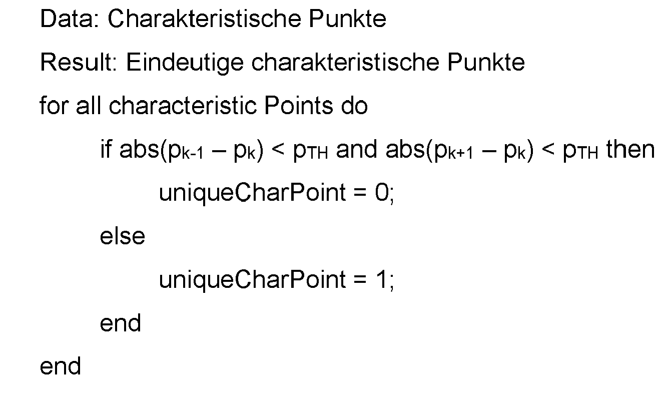

Das Setzen des Parameters uniqueCharPoint = 1 bedeutet dabei, dass der entsprechende charakteristische Punkt 20 als eindeutiger charakteristischer Punkt 30 klassifiziert wurde, also nicht aussortiert wurde.

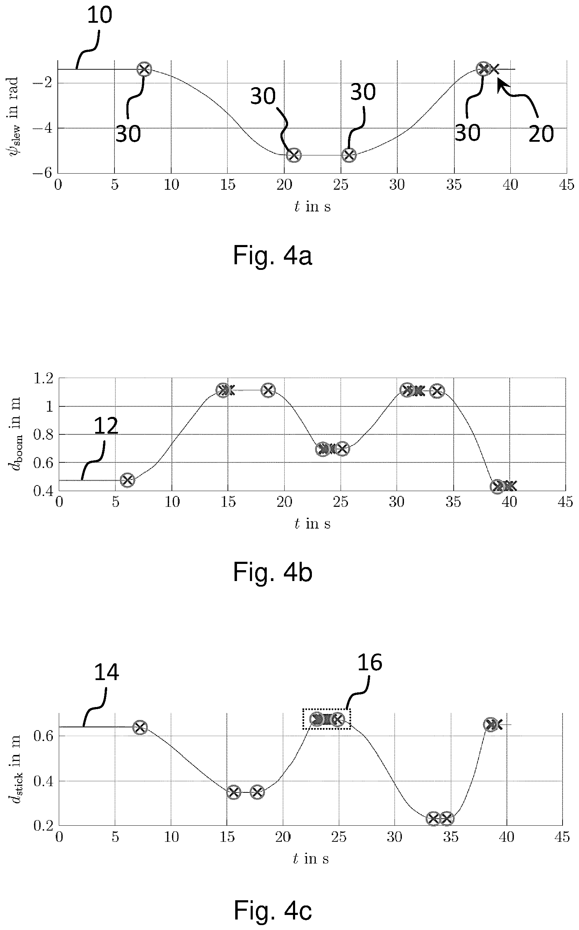

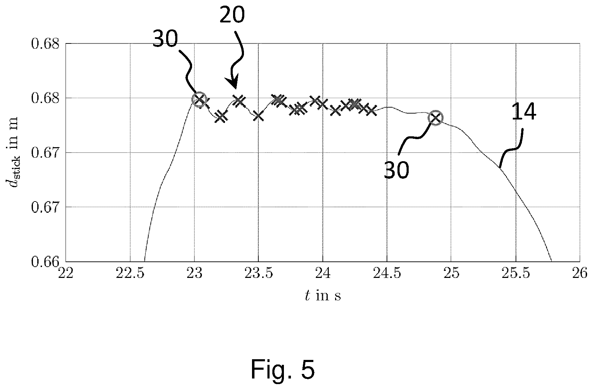

Die Figuren 4a-c zeigen für die drei Aktuatoren (Figur 4a: Drehwerk, Figur 4b: Ausleger, Figur 4c: Stiel) die in den Figuren 2a-c dargestellten Bewegungsbahnen 10, 12, 14 mit den durch den Algorithmus 1 aufgefundenen charakteristischen Punkten 20, welche wie zuvor durch das Symbol "x" gekennzeichnet sind. Zudem sind die durch Algorithmus 2 herausgefilterten eindeutigen charakteristischen Punkte 30 durch ein Kreissymbol dargestellt. In der Figur 5 ist wieder der durch den gepunkteten Kasten in Figur 4c markierte Bereich vergrößert dargestellt. In den Figuren 4a-c und 5 sind die charakteristischen Punkte 20 und die eindeutigen charakteristischen Punkte 30 überlagert dargestellt.

Es ist gut zu erkennen, dass der Algorithmus 2 die charakteristischen Punkte 20, welche durch Schwingungen der Aktuatoren verursacht wurden, aussortiert und nicht mehr betrachtet. Lediglich die Start- und Stopppunkte der Bewegungen sind als eindeutige charakteristische Punkte 30 identifiziert. Damit verringert sich durch die Anwendung des Algorithmus 2 die gesamte Anzahl an charakteristischen Punkten 20 und somit die Menge der im Abfahrmodus automatisch anzufahrenden Punkte. Das Ausfiltern geschieht jedoch, ohne dass wesentliche Informationen für die automatisch abzufahrende Bewegung im Abfahrmodus verloren gehen.

Damit im Abfahrmodus nicht alle eindeutigen charakteristischen Punkte 30 für jeden Aktuator separat angefahren werden, müssen die Punkte 30 für alle Aktuatoren zeitlich synchronisiert werden. Wird also ein eindeutiger charakteristischer Punkt 30 für einen Aktuator bestimmt, so werden auch für die anderen Aktuatoren zu diesem Zeitpunkt deren Positionen als Punkte gespeichert, obwohl es sich für diese anderen Bewegungsbahnen 10, 12, 14 nicht um charakteristische Punkte 20 handeln muss. Diese zusätzlich gespeicherten Punkte werden Synchronisierungspunkte 40 genannt. Insgesamt sind also alle zu einer Bewegungsbahn 10, 12, 14 eines Aktuators gespeicherten Punkte 30, 40 mit den gespeicherten Punkten 30, 40 der übrigen Aktuatoren zeitlich synchronisiert.

Somit werden im Abfahrmodus jeweils zeitlich synchronisierte Punkte 30, 40 für alle Aktuatoren angefahren und der gesamte Bewegungsablauf erfolgt in Anlehnung an die im Lernmodus erfassten Bewegungsbahnen 10, 12, 14. Generell ergeben sich dabei andere Bahnen (sowohl in Aktuatorkoordinaten, als auch in Gelenk- oder TCP-Koordinaten), da die Bewegungsbahnen 10, 12, 14 der einzelnen Komponenten durch das Planungsmittel neu geplant bzw. berechnet werden.

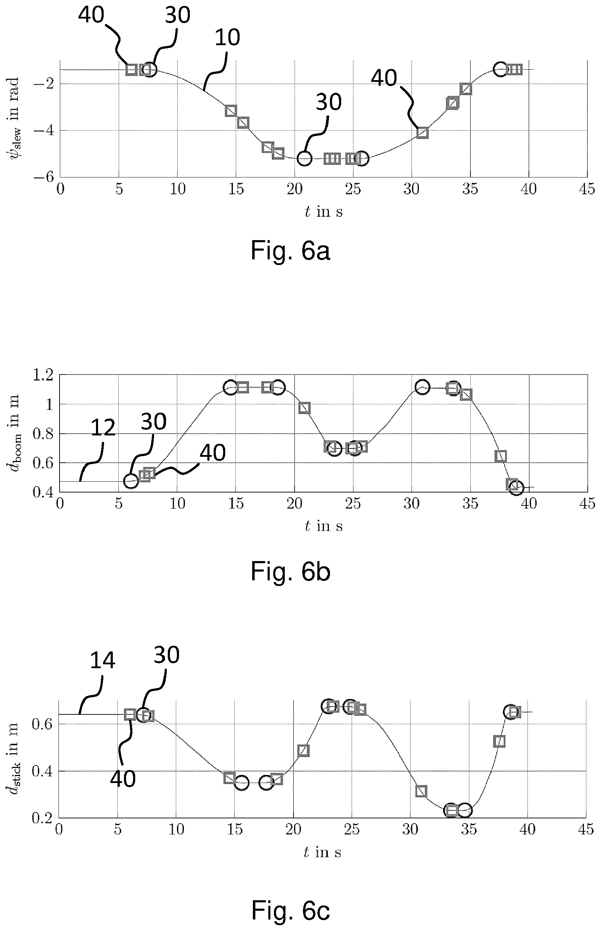

In den Figuren 6a-c sind die im Abfahrmodus anzufahrenden eindeutigen charakteristischen Punkte 30, jeweils gekennzeichnet durch einen Kreis, und die Synchronisierungspunkte 40, jeweils als Quadrat dargestellt, für alle Aktuatoren zu erkennen (die Bewegungsbahnen 10, 12, 14 entsprechen den in den Figuren 2a-c und 4a-c gezeigten Bahnen). Durch die Synchronisierungspunkte 40 ist garantiert, dass beispielsweise der Ausleger (Figur 6b) erst bei einem entsprechenden Drehwinkel (Figur 6a) wieder mit der Bewegung startet und nicht schon bei Erreichen eines Stopp-Punktes 30, wie es bei einer isolierten Einzelbewegung ohne Synchronisierung der Fall sein würde.

Im Abfahrmodus werden für die verschiedenen Bewegungsbahnen 10, 12, 14 gespeicherten Punkte 30, 40 durch eine entsprechende Ansteuerung der Aktuatoren mittels der Steuerung automatisch abgefahren. Die anzufahrende Punktemenge umfasst also die durch die Algorithmen 1 und 2 aufgefundenen eindeutigen charakteristischen Punkte 30 sowie die zusätzlich gespeicherten Synchronisierungspunkte 40. Das heißt, dass jeder Punktevektor dieser Punktemenge bzw. Punktematrix nacheinander angefahren wird.

Die Neuplanung der abzufahrenden Bewegungsbahnen 10, 12, 14 von einem Punkt 30, 40 zum nächsten Punkt 30, 40 wird durch ein Planungsmittel in Form eines Trajektoriengenerierungsalgorithmus bzw. Trajektorienplaners durchgeführt. Dies kann beispielsweise ein Cⁿ-Trajektorienplaner für die Position sein. "Cⁿ" bedeutet dabei "n-fach stetig differenzierbar bezüglich der Position". Wie oft die Positionstrajektorie bzw. die neu berechnete Bewegungsbahn differenzierbar sein muss, ist abhängig von der verwendeten Vorsteuerung für die Aktuatorgeschwindigkeit. Die Parametrierung des Trajektorienplaners erfolgt durch die Vorgabe der Beschränkungen der n Ableitungen sowie die Beschränkung des Eingangs des n+1-ten Integrators, welcher optimaler Weise Bang-Bang-Verhalten zeigt. Für die Neuplanung der Bewegungsbahnen 10, 12, 14 können alle bekannten Trajektorienplaner verwendet werden. Beispielsweise kann aufgrund der verwendeten Vorsteuerung eine C²-Trajektorie geplant werden. Die Parametrierung erfolgt damit über die Vorgabe der positiven sowie negativen Beschränkungen der Geschwindigkeit, Beschleunigung und des Rucks.

Um ein möglichst flüssiges Verfahren des Arbeitsgeräts 1 zu ermöglichen, sollten alle Aktuatoren zum gleichen Zeitpunkt den nächsten abzufahrenden Punkt 30, 40 auf deren Bewegungsbahn erreichen. Dazu kann die Geschwindigkeit des langsamsten Aktuators nicht erhöht werden, da er seine Grenze, bei hydraulischen Aktuatoren typischerweise die Geschwindigkeit, schon erreicht hat. Deshalb müssen alle Aktuatoren auf den langsamsten Aktuator synchronisiert werden. Das erfolgt durch Variation der Geschwindigkeitsbegrenzung des Trajektorienplaners, insbesondere mittels eins iterativen Verfahrens. Die Grenzen werden dabei durch eine binare Suche angepasst. Hierbei können auch höhere Ableitungen variiert werden.

Generell wird bei dieser Suche nicht auf die exakt gleiche Endzeit synchronisiert, sondern es wird ein frei wählbarer Parameter als Schwellenwert bzw. als Zeitfenster definiert. Ist die Endzeit der zu synchronisierenden Bewegungsbahn 10, 12, 14 innerhalb dieses Zeitfensters um die Endzeit des langsamsten Aktuators, so ist die Synchronisierung erfolgreich beendet. Vorzugsweise kann das Zeitfenster vom Bediener eingestellt bzw. verändert werden. Es sei hierbei angemerkt, dass der Algorithmus zur Synchronisierung für beliebig viele Aktuatoren funktioniert. Zudem können durch die entsprechenden Parameter verschiedene Trajektorienplaner verwendet werden.

Sind die Bewegungsbahnen 10, 12, 14 für alle Aktuatoren zu dem jeweils nächsten Punkt 30, 40 geplant, so werden diese als Referenzwerte an die unterlagerten Regler zur Verfügung gestellt. Zu jedem diskreten Zeitschritt werden die generierten Bewegungsbahnen 10, 12, 14 dazu ausgewertet. Die Schrittweite der Diskretisierung ist dabei beliebig parametrierbar. Befinden sich alle Positionstrajektorien bzw. Bewegungsbahnen 10, 12, 14 innerhalb eines parametrierbaren Radius bzw. Abstandschwellenwerts um die anzufahrenden Soll-Punkte 30, 40, so erfolgt die Berechnung der nächsten Bewegungsbahnabschnitte der Aktuatoren, inklusive der zeitlichen Endpunktsynchronisierung, zu den nächsten anzufahrenden Punkten 30, 40. Als Startwerte für die Bewegungsbahnen 10, 12, 14 werden die aktuellen Referenzwerte jeder Bewegungsbahn 10, 12, 14 verwendet, damit ein möglichst flüssiges Verfahren resultiert. Die Abstandschwellenwerte können dabei für jeden Punkt 30, 40 und für jeden Aktuator separat parametriert werden.

Erfindungsgemäß kann mindestens ein Parameter der im Abfahrmodus ausgeführten automatischen Bewegung variiert werden. Hierzu kann vorgesehen sein, dass der Bediener des Arbeitsgeräts 1 die Geschwindigkeit aller Aktuatoren über eine Eingabe jeweils vorgeben kann. Hierzu kann ein eigenständiges Eingabemittel vorgesehen sein, oder er kann die für die manuelle Steuerung des Arbeitsgeräts 1 vorhandenen Eingabemittel (z.B. Meisterschalter) einsetzen. Weiterhin ist denkbar, dass abhängig von den Umgebungsbedingungen wie der Temperatur und/oder von der Leistung des Arbeitsgeräts 1 die Parameter bzw. Randbedingungen der Trajektorienplanung automatisch angepasst werden, um ein optimales Führungsverhalten zu erzielen.

Die Neuplanung der Bewegungsbahnen 10, 12, 14 mittels des Planungsmittels kann unter verschiedenen Kriterien angepasst werden. Dabei werden Beschränkungen, die sich durch die Umgebung und/oder die Charakteristik des Arbeitsgeräts ergeben, berücksichtigt. Beispiele für variierbare Parameter sind der minimale Energieeintrag, eine geringe Bearbeitungszeit, eine kürzeste Strecke oder eine geringe Abweichung von den eingelernten Bewegungsbahnen 10, 12, 14. Auch Beschränkungen, die sich aus der vorhandenen Infrastruktur ergeben, können idealerweise berücksichtigt werden. Zudem ist es vorteilhafterweise möglich, die Aufnahme- und/oder Abladeposition geeignet zu verschieben, falls notwendig. Hierfür kann auch vorgesehen sein, dass ein Offset-Parameter festlegbar ist, um welchen die Start- und/oder Endposition der Bewegung automatisch bei jedem Arbeitsschritt verschoben wird.

Das Einlernen der Bewegungsbahnen 10, 12, 14 im Lernmodus kann alternativ oder zusätzlich zu einer manuellen Ausführung der Bewegung bzw. manuellen Bedienung durch einen Algorithmus geschehen, der die Bedienmuster des Fahrers detektiert. In diesem Fall erkennt die Steuerung sich wiederholende Arbeitszyklen und generiert entsprechende Bewegungsbahnen 10, 12, 14, die im Abfahrmodus abgefahren werden können.

Eine wesentliche Charakteristik des Abfahrmodus ist, dass jeweils die Bewegungsbahnen 10, 12, 14 vom aktuellen Punktevektor 30, 40 zum nächsten Punktevektor 30, 40 unter zeitlichen Synchronisierungsaspekten von dem Planungsmittel neu geplant bzw. berechnet werden. Abhängig von verschiedenen Parametern der Trajektoriengenerierung durch das Planungsmittel ist es möglich, dass sich aufgrund der zusätzlich eingefügten Synchronisierungspunkte 40 die Geschwindigkeit eines Aktuators zwischen zwei eindeutigen charakteristischen Punkten 30 (also zwischen zwei Start- und Stopp-Punkten einer Bewegung) verringert oder erhöht.

Als besonders störend wird das für das Drehwerk empfunden. Wird beispielsweise das Drehwerk um 180° gedreht und Ausleger und Stiel gleichzeitig dazu bewegt, so kann es zu einer Detektion von eindeutigen charakteristischen Punkte 30 für Ausleger oder Stiel während der Drehbewegung kommen. Dies hat zur Folge, dass zu diesen Zeitpunkten jeweils ein Synchronisierungspunkt 40 für das Drehwerk zwischen dessen Start- und Endpunkten 30 gesetzt wird. Das Drehwerk sollte optimaler Weise vom Anfangs- zum End-Drehwinkel durchfahren. Da jedoch die Drehbewegung von dem Planungsmittel jeweils von einem Punkt 30, 40 zum nächsten Punkt 30, 40 neu geplant wird, ist es möglich, dass das Drehwerk an einem der hinzugefügten Synchronisierungspunkte 40 dessen Geschwindigkeit verringert.

Dieses Verhalten ist beispielsweise in der Bewegungsbahn 10 des Drehwerks in Figur 6a bei t = 15 s zu erkennen. Zu diesem Zeitpunkt wurden zum einen für den Ausleger (Figur 6b) und zum anderen für den Stiel (Figur 6c) jeweils ein eindeutiger charakteristischer Punkt 30 als Start- und Stopppunkte der entsprechenden Bewegungen detektiert und für das Drehwerk entsprechend synchronisiert (d.h. jeweils ein Synchronisierungspunkt 40 hinzugefügt), woraus sich der eine Verringerung der Drehgeschwindigkeit repräsentierende Knick in der Bewegungsbahn 10 des Drehwerks ergibt.

Eine Abhilfe hierfür kann eine nicht feste Synchronisierung der Bewegungsbahn 10 des Drehwerks sowie eine Synchronisierung der lediglich Bewegungsbahnen 12, 14 der bewegten Komponenten (Ausleger und Stiel) sein. Es erfolgt dazu die gleiche Detektion der eindeutigen charakteristischen Punkte 30 mittels der Algorithmen 1 und 2 wie zuvor beschrieben. Darüber hinaus werden die Anfangs- und End-Drehwinkel 30 des Drehwerks erfasst. Der Ausleger und der Stiel werden zueinander synchronisiert zu dem jeweiligen Punktevektor 30, 40 verfahren. Sobald der nächste Punkt 30, 40 eine Veränderung des Drehwinkels erfordert, wird die Bewegungsbahn 10 des Drehwerks vom Anfangs-Drehwinkel 30 zum End-Drehwinkel 30 direkt durchgeplant. Die verbliebenen Aktuatoren werden dann entsprechend dem Drehwinkel gesteuert. Dadurch ist ein flüssiges Verfahren des Drehwerks garantiert.

Erfordert eine Aufgabe das wiederholte Anfahren zweier Positionen, beispielsweise einer ersten Position zur Aufnahme von Material bzw. einer Ladung und einer zweiten Position zum Abladen von Material, so ist es möglich, dass die im Lernmodus eingelernte Bewegung nur in eine Richtung, z.B. von der Aufnahme- zur Abladeposition, aufgenommen wird. Die Reihenfolge der Bewegung im Abfahrmodus lässt sich anschließend vom Bediener oder von der Steuerung umkehren. Damit ist es möglich, dass auf Bedienereingabe die Aufnahmeposition oder die Abladeposition abhängig von der aktuellen Stellung aller Aktuatoren angefahren wird.

Des Weiteren ist es möglich, dass das Drehwerk zu Beginn einer Bewegung des Arbeitsgeräts 1 nicht auf der Aufnahme- oder Abladeposition steht. Es kann daher sinnvoll sein, mit dem Drehwerk nicht zuerst auf die Start-Position, welche abhängig von der gewünschten Bewegung ist (Aufnehmen oder Abladen), zu fahren und erst dann zur gewünschten End-Position, sondern von der aktuellen Position des Drehwerks zuerst die anderen Aktuatoren (d.h. Ausleger und Stiel) zu verfahren. Diese Bewegungen 12, 14 erfolgen, bis eine Veränderung des Drehwinkels in den abzufahrenden Soll-Punkten 30, 40 auftritt bzw. erforderlich wird. Erst dann wird die Bewegungsbahn 10 des Drehwerks von der aktuellen Position zu der gewünschten End-Position geplant.

Eine zusätzliche optionale Erweiterung betrifft alle Aktuatoren außer dem Drehwerk. Üblicherweise wird Material vom Arbeitsgerät 1 aus einer geringen Höhe aufgenommen. Anschließend wird der Tool-Center-Point (TCP) vertikal nach oben bewegt. Ist im Lernmodus nun die Position des TCPs in vertikaler Richtung höher als die TCP-Position des ersten abzufahrenden Punkts 30, 40 in vertikaler Richtung, so ist es nicht sinnvoll, zuerst vertikal nach unten zu verfahren und anschließend wieder nach oben, bevor die Drehbewegung startet. Deshalb können alle Soll-Punktevektoren 30, 40 übersprungen werden, welche eine niedrigere vertikale TCP-Position besitzen als die aktuelle TCP-Position. Das Überspringen wird maximal bis zum Start der Bewegung des Drehwerks durchgeführt.

### Bezugszeichenliste:

- 1: Arbeitsgerät
- 2: Unterwagen
- 3: Oberwagen
- 4: Bewegliche Komponente
- 5: Bewegliche Komponente
- 6: Bewegliche Komponente
- 7: Bewegliche Komponente
- 10: Bewegungsbahn Drehwerk
- 12: Bewegungsbahn Auslegeraktuator
- 14: Bewegungsbahn Stielaktuator
- 16: Vergrößerungsausschnitt
- 20: Charakteristischer Punkt
- 30: Eindeutiger charakteristischer Punkt
- 40: Synchronisierungspunkt

## Patentansprüche

1. Verfahren zur automatischen Bewegung eines Arbeitsgeräts (1), insbesondere eines Materialumschlag- oder Erdbewegungsgeräts, wobei das Arbeitsgerät (1) eine Steuerung und mindestens zwei Komponenten umfasst, welche jeweils mittels eines von der Steuerung steuerbaren Aktuators unabhängig voneinander bewegbar sind, wobei die Steuerung einen Lernmodus und einen Abfahrmodus aufweist und wobei im Abfahrmodus das Arbeitsgerät (1) durch eine entsprechende Steuerung der Aktuatoren automatisch von einer ersten Position in eine zweite Position verfahren wird, wobei
die Steuerung im Lernmodus während einer Bewegung des Arbeitsgeräts (1) Daten betreffend die Einzelbewegungen der Komponenten erfasst und abspeichert, wobei die Steuerung der Aktuatoren während der automatischen Bewegung des Arbeitsgeräts (1) im Abfahrmodus auf Grundlage dieser Daten erfolgt und wobei mindestens ein Parameter der automatischen Bewegung des Arbeitsgeräts (1) durch den Bediener eingestellt werden kann, wobei
die Steuerung im Lernmodus die Bewegungsbahnen (10, 12, 14) der Aktuatoren in diskreten Zeitabständen erfasst, wobei die erfassten Daten die momentanen Positionen umfasst,
**dadurch gekennzeichnet,**
**dass** die Steuerung im Lernmodus weiterhin beim Erfassen der Bewegungsbahnen (10, 12, 14) der Aktuatoren in diskreten Zeitabständen zusätzlich die momentanen Geschwindigkeiten der Aktuatoren erfasst, und für jede Bewegungsbahn (10, 12, 14) momentane Aktuatorpositionen als charakteristische Punkte (20) speichert, wobei die charakteristischen Punkte (20) die Aktuatorpositionen zu Beginn und/oder am Ende einer Aktuatorbewegung umfassen, wobei die Steuerung eine momentane Aktuatorposition zu einem bestimmten Zeitpunkt als charakteristischen Punkt (20) klassifiziert, falls mindestens eine Bedingung hinsichtlich der momentanen Aktuatorgeschwindigkeit erfüllt ist,
wobei die Bedingung erfüllt ist, wenn die momentane Aktuatorgeschwindigkeit einen ersten Schwellenwert zu Beginn einer Aktuatorbewegung übersteigt oder am Ende einer Aktuatorbewegung unterschreitet und/oder wenn sich das Vorzeichen der momentanen Aktuatorgeschwindigkeit ändert.

2. Verfahren nach Anspruch 1, **dadurch gekennzeichnet, dass** der einstellbare Parameter eine Maximal- oder Minimalgeschwindigkeit eines oder mehrerer Aktuatoren, ein minimaler Energieeintrag, eine kürzeste, schnellste oder anhand anderer Kriterien optimierte Strecke oder eine Position, insbesondere Anfangs- oder Endposition, des Arbeitsgeräts (1) ist.

3. Verfahren nach Anspruch 1 oder 2, **dadurch gekennzeichnet, dass** die Steuerung nur solche charakteristischen Punkte (30) speichert, deren Abstand zu einem direkt vorangegangenen und/oder darauffolgenden charakteristischen Punkt (20) einen zweiten Schwellenwert überschreitet.

4. Verfahren nach einem der Ansprüche 1 bis 3, **dadurch gekennzeichnet, dass** die Steuerung im Lernmodus für jede Bewegungsbahn (10, 12, 14) zusätzlich die nicht als charakteristischer Punkt (20) klassifizierten Aktuatorpositionen (40) zu den Zeitpunkten speichert, die den Zeitpunkten der erfassten charakteristischen Punkte (20, 30) der anderen Bewegungsbahnen (10, 12, 14) entsprechen, sodass die Zeitpunkte der insgesamt gespeicherten Aktuatorpositionen (20, 30, 40) einer (10, 12, 14) Bewegungsbahn den Zeitpunkten der ins- gesamt gespeicherten charakteristischen Aktuatorpositionen (20, 30, 40) der übrigen Bewegungsbahnen (10, 12, 14) entsprechen.

5. Verfahren nach Anspruch 4, **dadurch gekennzeichnet, dass** die Steuerung die Aktuatoren derart ansteuert, dass alle Aktuatoren die einander zeitlich entsprechenden Aktuatorpositionen (20, 30, 40) innerhalb eines vorzugsweise einstellbaren Zeitfensters zeitgleich erreichen, wobei die Geschwindigkeiten aller Aktuatoren an den langsamsten Aktuator angepasst werden, wobei die Anpassung insbesondere mittels eines Iterativen Verfahrens erfolgt.

6. Verfahren nach einem der Ansprüche 4 bis 5, **dadurch gekennzeichnet, dass** die Steuerung im Abfahrmodus die verschiedenen Aktuatoren auf Grundlage der für jede Bewegungsbahn (10, 12, 14) gespeicherten Aktuatorpositionen (20, 30, 40) ansteuert, wobei die Steuerung ein Planungsmittel umfasst, welches die automatisch abzufahrenden Bewegungsbahnen (10, 12, 14) auf Grundlage der gespeicherten Aktuatorpositionen (20, 30, 40) berechnet, wobei die Aktuatoren so angesteuert werden, dass sie den berechneten Bewegungsbahnen (10, 12, 14) folgen.

7. Verfahren nach Anspruch 6, **dadurch gekennzeichnet, dass** das Planungsmittel die abzufahrenden Bewegungsbahnen (10, 12, 14) der Aktuatoren jeweils abschnittsweise zwischen je zwei benachbarten gespeicherten Aktuatorpositionen (20, 30, 40) neu berechnet, wobei das Planungsmittel, sobald die momentane Position eines Aktuators einen vorzugsweise einstellbaren Abstandschwellenwert zu der aktuell angefahrenen gespeicherten Aktuatorposition (20, 30, 40) unterschreitet, den nächsten Bewegungsbahnabschnitt bis zur darauffolgenden gespeicherten Aktuatorpositionen (20, 30, 40) berechnet.

8. Verfahren nach Anspruch 6 oder 7, **dadurch gekennzeichnet, dass** die Berechnung der Bewegungsbahnen (10, 12, 14) durch das Planungsmittel unter definierten Randbedingungen erfolgt, wobei mindestens eine Randbedingung durch den Bediener, insbesondere über eine mit der Steuerung verbundene Eingabeeinheit, eingestellt werden kann und wobei es sich bei der mindestens einen einstellbaren Randbedingung vorzugsweise um eine Maximal- oder Minimalgeschwindigkeit eines oder mehrerer Aktuatoren, einen minimalen Energieeintrag, eine kürzeste, schnellste oder anhand anderer Kriterien optimierte Strecke und/oder eine Position, insbesondere Anfangs- oder Endposition, des Arbeitsgeräts (1) handelt.

9. Verfahren nach Anspruch 1, **dadurch gekennzeichnet, dass** auf Grundlage der erfassten Aktuatorpositionen und -geschwindigkeiten eine zeitoptimale Trajektorie berechnet wird, welche im Abfahrmodus automatisch abgefahren wird, wobei die im Lernmodus für jeden Aktuator erfassten Positionspfade nicht angepasst werden, wobei die Geschwindigkeit jedes Aktuators an jedem Abtastschritt skaliert wird, wobei für die Skalierung an jedem Abtastschritt nur ein einziger Skalierungsfaktor verwendet wird, und wobei bei der Berechnung der zeitoptimalen Trajektorie vorzugsweise physikalische Beschränkungen der Aktuatoren und/oder der Komponenten wie maximale Geschwindigkeiten der Aktuatoren, maximale Beschleunigungen der Aktuatoren, ein maximaler Ruck eines oder mehrerer Aktuatoren und/oder eine maximale Fördermenge einer Pumpe berücksichtigt werden.

10. Verfahren nach einem der vorhergehenden Ansprüche, **dadurch gekennzeichnet, dass** die im Lernmodus erfasste Bewegung des Arbeitsgeräts (1) aufgrund einer manuellen Bedienung erfolgt.

11. Verfahren nach einem der vorhergehenden Ansprüche, **dadurch gekennzeichnet, dass** eine erste Komponente ein drehbar auf einem Unterwagen (2) des Arbeitsgeräts (1) gelagerter Oberwagen (3) und eine zweite Komponente ein an dem Oberwagen (3) um eine horizontale Achse schwenkbar gelagertes erstes Auslegerelement ist, wobei vorzugsweise eine dritte Komponente ein an dem Ausleger schwenkbar gelagertes zweites Auslegerelement ist.

12. Arbeitsgerät (1), insbesondere Materialumschlag- oder Erdbewegungsgerät, mit einer Steuerung zur Ausführung des Verfahrens nach einem der vorhergehenden Ansprüche.

## Claims

1. A method for the automatic movement of a working device (1), particularly a material handling or earth moving device, wherein the working device (1) comprises a controller and at least two components that are each movable independently of one another by means of an actuator controllable by the controller, wherein the controller has a learning mode and a travel mode, and wherein in travel mode the working device (1) is moved automatically from a first position into a second position by a corresponding control of the actuators, wherein
in learning mode the controller records and stores data relating to the individual movements of the components during a movement of the working device (1), wherein the control of the actuators during the automatic movement of the working device (1) in travel mode takes place on the basis of these data, and wherein at least one parameter of the automatic movement of the working device (1) is configurable by the operator, wherein
in learning mode the controller records the trajectories (10, 12, 14) of the actuators at discrete time intervals, wherein the recorded data comprise the instantaneous positions,
**characterized in that**
while recording the trajectories (10, 12, 14) of the actuators at discrete time intervals in learning mode, the controller also records the instantaneous speeds of the actuators and stores instantaneous actuator positions for each trajectory (10, 12, 14) as characteristic points (20), wherein the characteristic points (20) comprise the actuator positions at the start and/or at the end of an actuator movement, wherein the controller classifies an instantaneous actuator position at a specific time as a characteristic point (20) if at least one condition with respect to the instantaneous actuator speed is satisfied,
wherein the condition is satisfied if the instantaneous actuator speed exceeds a first threshold value at the start of an actuator movement or falls below it at the end of an actuator movement and/or if the sign of the instantaneous actuator speed changes.

2. The method according to claim 1, **characterized in that** the configurable parameter is a maximum or minimum speed of one or more actuators, a minimum energy input, a shortest or fastest route or a route optimized using other criteria, or a position, particularly a start or end position, of the working device (1).

3. The method according to claim 1 or 2, **characterized in that** the controller only stores those characteristic points (30) whose distance from a directly preceding and/or following characteristic point (20) exceeds a second threshold value.

4. The method according to one of claims 1 to 3, **characterized in that** in learning mode the controller additionally stores for each trajectory (10, 12, 14) the actuator positions (40) not classified as a characteristic point (20) at the times corresponding to the times of the recorded characteristic points (20, 30) of the other trajectories (10, 12, 14), such that the times of the actuator positions (20, 30, 40) of one (10, 12, 14) trajectory stored overall correspond to the times of the characteristic actuator positions (20, 30, 40) of the remaining trajectories (10, 12, 14) stored overall.

5. The method according to claim 4, **characterized in that** the controller controls the actuators such that all the actuators reach the temporally corresponding actuator positions (20, 30, 40) simultaneously within a preferably configurable time window, wherein the speeds of all the actuators are adjusted to the slowest actuator, wherein the adjustment takes place in particular by means of an iterative process.

6. The method according to one of claims 4 to 5, **characterized in that** in travel mode the controller controls the various actuators on the basis of the actuator positions (20, 30, 40) stored for each trajectory (10, 12, 14), wherein the controller comprises a planning means which calculates the trajectories (10, 12, 14) to be travelled automatically on the basis of the stored actuator positions (20, 30, 40), wherein the actuators are controlled such that they follow the calculated trajectories (10, 12, 14).

7. The method according to claim 6, **characterized in that** the planning means recalculates the trajectories (10, 12, 14) to be travelled by the actuators section-by-section between two adjacent stored actuator positions (20, 30, 40) in each case, wherein the planning means calculates the next trajectory section up to the following stored actuator position (20, 30, 40) as soon as the instantaneous position of an actuator falls below a preferably configurable distance threshold value with respect to the stored actuator position (20, 30, 40) currently being approached.

8. The method according to claim 6 or 7, **characterized in that** the calculation of the trajectories (10, 12, 14) by the planning means takes place under defined boundary conditions, wherein at least one boundary condition is configurable by the operator, particularly via an input unit connected to the controller, and wherein the at least one configurable boundary condition is preferably a maximum or minimum speed of one or more actuators, a minimum energy input, a shortest or fastest route or a route optimized using other criteria, and/or a position, particularly a start or end position, of the working device (1).

9. The method according to claim 1, **characterized in that** a time-optimal trajectory is calculated on the basis of the recorded actuator positions and speeds, said trajectory being travelled automatically in travel mode, wherein the position paths recorded for each actuator in learning mode are not adjusted, wherein the speed of each actuator is scaled at each sampling step, wherein only a single scaling factor is used for scaling at each sampling step, and wherein preferably physical restrictions of the actuators and/or the components, such as maximum speeds of the actuators, maximum accelerations of the actuators, a maximum jerk of one or more actuators, and/or a maximum delivery rate of a pump, are taken into account in the calculation of the time-optimal trajectory.

10. The method according to one of the preceding claims, **characterized in that** the movement of the working device (1) recorded in learning mode takes place on the basis of a manual operation.

11. The method according to one of the preceding claims, **characterized in that** a first component is a superstructure (3) rotatably mounted on an undercarriage (2) of the working device (1) and a second component is a first boom element mounted on the superstructure (3) so as to be pivotable about a horizontal axis, wherein preferably a third component is a second boom element pivotably mounted on the boom.

12. A working device (1), particularly a material handling or earth moving device, comprising a controller for carrying out the method according to one of the preceding claims.

## Revendications

1. Procédé pour le déplacement automatique d'un appareil de travail (1), notamment d'un appareil de manutention de matériaux ou de terrassement, l'appareil de travail (1) comprenant une commande et au moins deux composants qui peuvent chacun être déplacés indépendamment l'un de l'autre au moyen d'un actionneur pouvant être commandé par la commande, la commande présentant un mode d'apprentissage et un mode de parcours et, en mode de parcours, l'appareil de travail (1) étant déplacé automatiquement d'une première position dans une deuxième position par une commande correspondante des actionneurs,
la commande en mode d'apprentissage détectant et enregistrant pendant un déplacement de l'appareil de travail (1) des données concernant les déplacements individuels des composants, la commande des actionneurs pendant le déplacement automatique de l'appareil de travail (1) en mode de parcours s'effectuant sur la base de ces données et au moins un paramètre du déplacement automatique de l'appareil de travail (1) pouvant être réglé par l'opérateur,
la commande en mode d'apprentissage détectant les trajectoires de déplacement (10, 12, 14) des actionneurs à des intervalles de temps discrets, les données détectées comprenant les positions momentanées,
**caractérisé en ce que**
la commande en mode d'apprentissage détecte en outre, lors de la détection des trajectoires de déplacement (10, 12, 14) des actionneurs à des intervalles de temps discrets, les vitesses momentanées des actionneurs, et enregistre pour chaque trajectoire de déplacement (10, 12, 14) les positions d'actionneur momentanées en tant que points caractéristiques (20), les points caractéristiques (20) comprenant les positions d'actionneur au début et/ou à la fin d'un déplacement d'actionneur, la commande classant une position d'actionneur momentanée à un instant déterminé comme point caractéristique (20) si au moins une condition concernant la vitesse d'actionneur momentanée est remplie,
la condition étant remplie lorsque la vitesse d'actionneur momentanée est supérieure à une première valeur seuil au début d'un déplacement d'actionneur ou inférieure à la fin d'un déplacement d'actionneur et/ou lorsque le signe de la vitesse d'actionneur momentanée change.

2. Procédé selon la revendication 1, **caractérisé en ce que** le paramètre réglable est une vitesse maximale ou minimale d'un ou plusieurs actionneurs, un apport minimal d'énergie, un trajet le plus court, le plus rapide ou optimisé à l'aide d'autres critères ou une position, notamment la position initiale ou finale, de l'appareil de travail (1).

3. Procédé selon la revendication 1 ou 2, **caractérisé en ce que** la commande n'enregistre que les points caractéristiques (30) dont la distance à un point caractéristique (20) directement précédent et/ou suivant est supérieure à une deuxième valeur seuil.

4. Procédé selon l'une quelconque des revendications 1 à 3, **caractérisé en ce que** la commande en mode d'apprentissage pour chaque trajectoire de déplacement (10, 12, 14) enregistre en outre les positions d'actionneur (40) non classées comme point caractéristique (20) aux instants qui correspondent aux instants des points caractéristiques détectés (20, 30) des autres trajectoires de déplacement (10, 12, 14), de telle sorte que les instants de l'ensemble des positions d'actionneur enregistrées (20, 30, 40) d'une trajectoire de déplacement (10, 12, 14) correspondent aux instants de l'ensemble des positions d'actionneur caractéristiques enregistrées (20, 30, 40) des autres trajectoires de déplacement (10, 12, 14).

5. Procédé selon la revendication 4, **caractérisé en ce que** la commande commande les actionneurs de telle sorte que tous les actionneurs atteignent simultanément les positions d'actionneur (20, 30, 40) qui se correspondent dans le temps à l'intérieur d'une fenêtre de temps de préférence réglable, les vitesses de tous les actionneurs étant adaptées à l'actionneur le plus lent, l'adaptation s'effectuant notamment au moyen d'un procédé itératif.

6. Procédé selon l'une quelconque des revendications 4 à 5, **caractérisé en ce que** la commande en mode de parcours commande les différents actionneurs sur la base des positions d'actionneur enregistrées (20, 30, 40) pour chaque trajectoire de déplacement (10, 12, 14), la commande comprenant un moyen de planification qui calcule les trajectoires de déplacement (10, 12, 14) à parcourir automatiquement sur la base des positions d'actionneur enregistrées (20, 30, 40), les actionneurs étant commandés de telle sorte qu'ils suivent les trajectoires de déplacement (10, 12, 14) calculées.

7. Procédé selon la revendication 6, **caractérisé en ce que** le moyen de planification recalcule les trajectoires de déplacement (10, 12, 14) à parcourir des actionneurs respectivement par sections entre deux positions d'actionneur enregistrées (20, 30, 40) voisines, le moyen de planification calculant la section de trajectoire de déplacement suivante jusqu'à la position d'actionneur enregistrée (20, 30, 40) suivante dès que la position momentanée d'un actionneur est inférieure à une valeur seuil de distance de préférence réglable par rapport à la position d'actionneur enregistrée (20, 30, 40) actuellement atteinte.

8. Procédé selon la revendication 6 ou 7, **caractérisé en ce que** le calcul des trajectoires de déplacement (10, 12, 14) par le moyen de planification s'effectue sous des conditions limites définies, au moins une condition limite pouvant être réglée par l'opérateur, notamment par le biais d'une unité de saisie reliée à la commande, et l'au moins une condition limite réglable consistant de préférence en une vitesse maximale ou minimale d'un ou plusieurs actionneurs, un apport minimal d'énergie, un trajet le plus court, le plus rapide ou optimisé sur la base d'autres critères et/ou une position, notamment la position initiale ou finale, de l'appareil de travail (1).

9. Procédé selon la revendication 1, **caractérisé en ce que**, sur la base des positions et des vitesses d'actionneur détectées, une trajectoire optimale en termes de temps est calculée, laquelle est parcourue automatiquement en mode de parcours, les chemins de position détectés en mode d'apprentissage pour chaque actionneur n'étant pas adaptées, la vitesse de chaque actionneur étant mise à l'échelle à chaque pas de balayage, un seul facteur de mise à l'échelle étant utilisé pour la mise à l'échelle à chaque pas de balayage, et le calcul de la trajectoire optimale en termes de temps tenant de préférence compte de contraintes physiques des actionneurs et/ou des composants, telles que les vitesses maximales des actionneurs, les accélérations maximales des actionneurs, une secousse maximale d'un ou plusieurs actionneurs et/ou un débit maximal d'une pompe.

10. Procédé selon l'une quelconque des revendications précédentes, **caractérisé en ce que** le déplacement de l'appareil de travail (1) détecté en mode d'apprentissage est effectué sur la base d'une commande manuelle.

11. Procédé selon l'une quelconque des revendications précédentes, **caractérisé en ce qu'**un premier composant est un chariot supérieur (3) monté à rotation sur un chariot inférieur (2) de l'appareil de travail (1) et un deuxième composant est un premier élément de flèche monté sur le chariot supérieur (3) de manière à pouvoir pivoter autour d'un axe horizontal, un troisième composant étant de préférence un deuxième élément de flèche monté de manière à pouvoir pivoter sur la flèche.

12. Appareil de travail (1), notamment appareil de manutention de matériaux ou de terrassement, avec une commande pour la mise en oeuvre du procédé selon l'une quelconque des revendications précédentes.
